(19) Europäisches Patentamt
European Patent Office
Office européen des brevets

(11) **EP 4 583 364 A1**

(12) **EUROPEAN PATENT APPLICATION**
published in accordance with Art. 153(4) EPC

(43) Date of publication:
**09.07.2025 Bulletin 2025/28**

(21) Application number: **23859880.9**

(22) Date of filing: **20.07.2023**

(51) International Patent Classification (IPC):
**H02J 50/40** (2016.01)  **H02J 50/12** (2016.01)

(52) Cooperative Patent Classification (CPC):
**H02J 50/12; H02J 50/40**

(86) International application number:
**PCT/JP2023/026596**

(87) International publication number:
**WO 2024/048111 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **01.09.2022  JP 2022139140**

(71) Applicant: **DENSO CORPORATION**
**Kariya-city, Aichi 448-8661 (JP)**

(72) Inventors:
• **NAKAYASHIKI, Yusei**
  **Kariya- city, Aichi 4488661 (JP)**
• **YAMAGUCHI, Nobuhisa**
  **Kariya- city, Aichi 4488661 (JP)**

(74) Representative: **TBK**
**Bavariaring 4-6**
**80336 München (DE)**

(54) **NON-CONTACT POWER TRANSMISSION DEVICE, NON-CONTACT POWER TRANSMISSION METHOD, AND NON-CONTACT POWER SUPPLY SYSTEM**

(57)    Electric power is transferred using resonance from a power transmission device (50) to a power reception coil (31) magnetically coupled to the power transmission coil (51). In this case, even in a situation where the resonance circuit (53) is still left in operation with no magnetic field coupling between the power transmission coil and the power reception coil, the power transmission device supplies alternating-current power from a main power supply device (70) via power lines (NL1,NL2) to a resonance circuit which includes the power transmission coil magnetically coupled to the power reception coil provided in a power reception device (30), so that no excess current flows through the resonance circuit. The resonance circuit is placed in a resonance state when the power reception coil is close to the power transmission coil, and is placed in a non-resonance state when the power reception coil is not close to the power transmission coil. When an abnormality related to power transfer to the power reception device is detected, the power lines are then switched to a non- conductive state and the supply of alternating-current power from the main power supply device to the resonance circuit is disconnected.

FIG.4

**Description**

[Cross Reference to Related Application]

This application is based on and claims the benefit of priority from Japanese Patent Application No. 2022-139140 filed September 1, 2022, the contents of each of which are incorporated herein by reference.

[Technical Field]

This disclosure relates to a technology for wireless power transmission and power transfer.

[Background Art]

Various technologies have been proposed for wireless power transmission and wireless power transfer to objects to be powered. Although the objects to be powered do not necessarily have to be mobile objects, there are many proposals for technologies that wirelessly transmit power to mobile objects, as disclosed in JP 2017-51074 A, in order to take advantage of the benefits of wireless power transfer. As disclosed in JP 2017-51074 A, a configuration using magnetic field coupling, particularly magnetic field coupling using resonance, has been proposed for such wireless power transfer. In JP 2017-51074 A, a switch is provided to energize a power transmission coil capable of magnetic field coupling with a power reception coil on the power reception side, and power transmission is thereby turned on and off. In the following, the terms "contactless" and "wireless" are mostly exchangeable, and the terms "power supply" and "power transfer" are mostly exchangeable.

However, with regard to wireless power transfer using resonance circuits, for example, in cases where the power transmission side is left in operation while there is no power reception device, that is, while there is no partner for magnetic field coupling, due to occurrence of some kind of abnormality, a large current may flow through the resonance circuit on the power transmission side, causing a defect. There are various possible causes for such a defect, including a false detection of the presence of a power reception device and a failure of a power transmission device. A large current flowing through the resonance circuit on the power transmission side may cause a defect such as a failure in a main power supply device that supplies power to power transmission devices.

[Summary of the Invention]

[1] One aspect of the present disclosure provides a power transmission device that operates by being supplied with electric power from a main power supply device, and transmits electric power wirelessly to a power reception device installed on an object to be powered. The power transmission device includes: a resonance circuit that includes a power transmission coil magnetically coupled to a power reception coil included in the power reception device; an abnormality detection unit that detects an abnormality related to power transfer to the power reception device; a breaking unit that is provided in either or both of power lines for supplying alternating-current power from the main power supply device to the resonance circuit and that is capable of placing the power lines in a non-conductive state; a control unit that, when the abnormality detection unit detects the abnormality, actuates the breaking unit to disconnect the power supply from the main power supply device to the resonance circuit.

[2] Another aspect of the present disclosure provides a wireless power transmission method for transmitting electric power wirelessly to a power reception device installed on an object to be powered. The wireless power transmission method includes: supplying alternating-current power from a main power supply device via power lines to a resonance circuit that includes a power transmission coil magnetically coupled to a power reception coil included in the power reception device, the resonance circuit being placed in a resonance state when the power reception coil is close to the power transmission coil, and being placed in a non-resonance state when the power reception coil is not close to the power transmission coil; when detecting an abnormality related to power transfer to the power reception device, placing the power lines in a non-conductive state to disconnect the power transfer from the main power supply device to the resonance circuit.

[3] Still another aspect of the present disclosure provides a wireless power transfer system including: a main power supply device; a power transmission device that operates by being supplied with electric power from the main power supply device; and a power reception device that wirelessly receives electric power transmitted from the power transmission device. The power reception device includes: a power reception side resonance circuit equipped with a power reception coil; a rectification circuit that rectifies alternating current induced in the power reception side resonance circuit to generate direct current power; and a load device that operates using the direct current power. The power transmission device includes: a power transmission side resonance circuit equipped with a power transmission coil magnetically coupled to the power reception coil; a breaking unit that is provided in either or both of power lines from the main power supply device to the power transmission side resonance circuit and that is capable of switching the power lines to a non-conductive state; an abnormality detection unit that detects an abnormality related to power transfer to the power reception device; and a control unit that, when the abnormality detection unit detects the abnormality, actuates the breaking unit to disconnect the power transfer to the power transmission side resonance circuit.

[Brief Description of the Drawings]

The above and other objects, features and advantages of the present disclosure will become more apparent from the following detailed description with reference to the accompanying drawings. The drawings are:

FIG. 1 is a schematic diagram of a wireless power transfer system including a power reception device according to one embodiment;
FIG. 2 is a block diagram of a configuration of a main power supply device;
FIG. 3 is an illustration of the schematic configuration of a power transmission device and a power reception device;
FIG. 4 is a schematic diagram of the power transmission device;
FIG. 5 is a circuit diagram of an example configuration of a direct-current power supply unit of the power transmission device and a second power supply unit of the power reception device;
FIG. 6 is a circuit diagram of a detailed configuration of the power transmission device;
FIG. 7 is a flowchart of processing performed by a control unit;
FIG. 8A is a circuit diagram of a power transmission device according to a second embodiment;
FIG. 8B is an illustration of operation states of a switching unit and the power transmission device;
FIG. 8C is a circuit diagram of an example modification of the second embodiment;
FIG. 9 is a circuit diagram of a power transmission device according to a third embodiment;
FIG. 10 is a circuit diagram of a power transmission device according to a fourth embodiment;
FIG. 11A is a circuit diagram of a power transmission device equipped with a relay circuit according to a fifth embodiment;
FIG. 11B is an illustration of operation states of a switching unit and the power transmission device;
FIG. 12 is a circuit diagram of a power transmission device equipped with a relay circuit according to a sixth embodiment;
FIG. 13 is a circuit diagram of a power transmission device equipped with a relay circuit according to a seventh embodiment;
FIG. 14 is a circuit diagram of a power transmission device according to a modification of the seventh embodiment;
FIG. 15 is a circuit diagram of a power transmission device according to an eighth embodiment;
FIG. 16 is an illustration of operation states of a switching unit and the power transmission device; and
FIG. 17 is a circuit diagram of a power transmission device according to a modification of the eighth embodiment.

[Description of the Embodiments]

A. First Embodiment:

(A1) Overall Configuration of Wireless Power Transfer System:

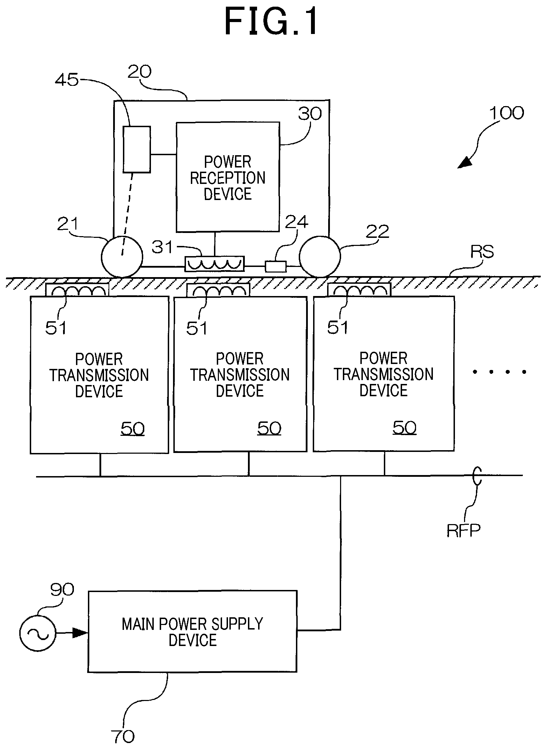

FIG. 1 illustrates the overall configuration of a wireless power transfer system 100, which includes power transmission devices 50 according to a first embodiment. As illustrated in FIG. 1, this wireless power transfer system 100 includes a plurality of power transmission devices 50 buried beneath a road surface RS, and a power reception device 30 mounted to a mobile object 20 that propels itself on the road surface RS. The mobile object 20 is equipped with driving wheels 21 to be driven by a motor (not shown) included in a load device 45, non-driving wheels 22 that support, together with the driving wheels 21, the mobile object 20 movably on the road surface RS, a power reception coil 31 disposed under the floor of the mobile object 20, and a magnet 24 also disposed under the floor of the mobile object 20. The power reception coil 31 is magnetically coupled to any one of the power transmission coils 51 of the power transmission device 50 provided on the road surface RS side to receive supplied AC power, and supplies electric power to the load device 45. The power transmission devices 50 and the wireless power transfer system 100 that includes them are not limited to those that supply power to the power reception device 30 of the mobile object 20. The power reception device may be any device or system that performs wireless power transmission or power transfer to a mobile terminal or non-mobile object.
In an alternative configuration to the configuration in which the power transmission devices 50 are buried beneath the road surface RS, they may also be installed on the road surface or on walls or ceilings. In such a configuration, the power reception device 30 may be disposed in a predefined position within the mobile object 20, corresponding to the installation positions of the power transmission devices 50. For example, in a case where the power transmission devices 50 are installed on a wall, the power reception device 30 may be disposed on one side of the mobile object 20. The power reception device 30 may be moved or displaced inside the mobile object 20 in accordance with the positions of the power transmission devices 50, or a plurality of power reception devices 30 may be prepared and switched to be used.

The plurality of power transmission devices 50 that supply electric power to the power reception device 30 of the mobile object 20 have the same configuration and are arranged along a travel route of the mobile object 20. Of course, the power transmission devices 50 may be arranged on the road surface RS in two dimensions, not just along the travel route of the mobile object 20. Each power transmission device 50 is connected to common main power lines RFP. The main power lines RFP are supplied with alternating-current power with a high frequency (e.g. 85 kHz) from the main power supply device 70. In the present embodiment, all of the power transmission devices 50 are configured to have the same configuration. In an alternative, each of the power transmission devices 50 may have a different configuration, as long as power transfer is feasible. For example, the power transmission coils 51 of different sizes may be arranged alternately. Of course, the number of the power transmission devices 50 may one.

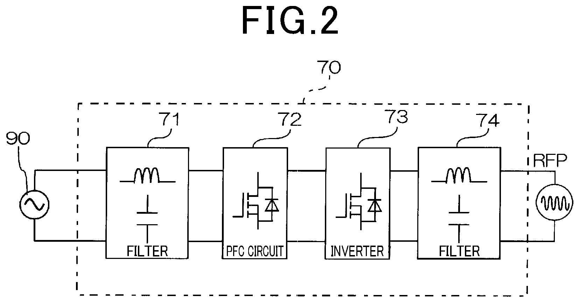

The main power supply device 70 receives an alternating current of a low frequency (e.g., 60 Hz) from the main power source 90 and converts it to an alternating current of a high frequency. FIG. 2 illustrates an example circuit configuration of the main power supply device 70. The main power supply device 70 includes, from the power reception side of the main power source 90, a noise filter 71 for AC output, a PFC circuit 72, an inverter 73, and a filter 74. The PFC circuit 72 is a known circuit that eliminates a phase difference between the input voltage and output current generated in the filter 71, suppresses harmonics, and thereby improves the power factor to approach one. The power supplied from the main power source 90 is converted to the alternating current of the above frequency by the inverter 73 and output to the main power lines RFP.

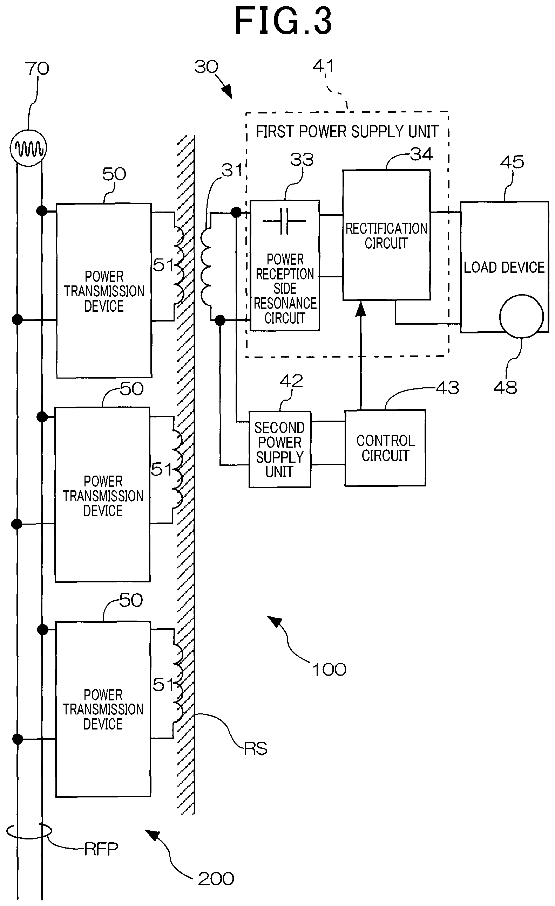

FIG. 3 illustrates the schematic configuration of the power transmission devices 50 and the power reception device 30. FIG. 3 illustrates a state in which one of the plurality of power transmission devices 50 is supplying power to the power reception device 30 of the mobile object 20. At this time, the power transmission coil 51 of the power transmission device 50 is magnetically coupled to the power reception coil 31 of the power reception device 30, and an induced current (AC) flows through the power reception coil 31. The power reception device 30 includes a first power supply unit 41, a second power supply unit 42, a control circuit 43, and a load device 45. The power reception coil 31 efficiently receives power through the power reception side resonance circuit 33 provided in the first power supply unit 41. A rectification circuit 34 is provided after the power reception side resonance circuit 33, and the power received by the power reception coil 31 is converted to direct current, which is in turn output to the load device 45. Although the load device 45 represents everything that uses the power output from the first power supply unit 41, the load device 45, in the case of the mobile object 20, includes a load that uses the main power used by the mobile object, such as the motor 48 for moving the mobile object 20. The load device 45 may further include a battery that temporarily stores electric power.

The second power supply unit 42 is a circuit that generates small amounts of direct-current power separately from the first power supply unit 41, and operates by receiving power from both ends of the power reception coil 31, that is, from a stage before the power reception side resonance circuit 33. The direct-current voltage output from the second power supply unit 42 is used by the control circuit 43, etc. The configuration of the second power supply unit 42 and the specific circuit configuration of the control circuit 43, etc., will be described in detail later. The power source for the control circuit 43 may be supplied from the load device 45 side.

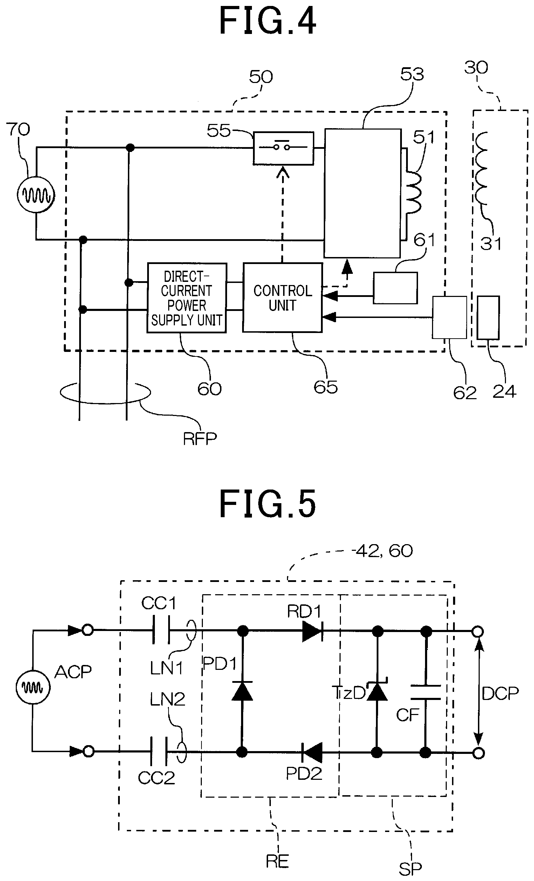

The circuit configuration of each power transmission device 50 will now be described using FIG. 4. In the FIG. 4, although the power transmission coil 51 and the resonance circuit 53 are depicted separately, the power transmission coil 51 is included in the resonance circuit 53 formed of the resonance capacitor C and the resonance capacitor C. A breaking unit 55 is interposed between the resonance circuit 53 and the main power lines RFP. The breaking unit 55 is a circuit that disconnects the supply of high-frequency power from the main power line RFP to the resonance circuit as needed. Equivalently, in the present embodiment, the breaking unit 55 may be a fuse, relay or switching element that turns on and off the supply of high-frequency power. Each power transmission device 50 further includes a control unit 65 that controls the breaking unit 55, an abnormality detection unit 61 that detects abnormalities such as overheating and abnormal current in the power transmission device 50, an approach sensor 62 that detects the presence of the mobile object 20, and a direct-current power supply unit 60 that supplies direct-current power to the control unit 65 for actuation.

Although the operations of the power transmission device 50 using the control unit 65 and the breaking unit 55 will be described later, not all of the power transmission devices 50 are in operation at all times. Only the power transmission devices 50 that the mobile object 20 is approaching are in operation. In the present embodiment, the approach of the mobile object 20 is detected by the approach sensor 62 detecting the magnetic force of the magnet 24 provided on the mobile object 20. A Hall element, magnetic sensor, or proximity switch may be employed as the approach sensor 62. When the approach sensor 62 detects the approach of the mobile object 20, the control unit 65 changes a resonance condition of the resonance circuit 53 to efficiently supply power to the power reception coil 31 through resonance. The detection of the mobile object 20 approaching and leaving may be implemented using any other method, such as detecting changes in mutual inductance caused by the power reception coil 31 approaching the power transmission coil 51, or detecting a minute magnetic flux emitted from the power reception coil by using the power transmission coil or a detection coil. There is no limit to the number of power transmission devices 50 in operation. Two or more power transmission devices 50 in close proximity to the mobile object 20 may be in operation.

To summarize the above from the perspective of wireless power transfer, on the ground side, the power source is the main power source 90, and the main power supply device 70 installed on the ground side converts the power from the main power source 90 into high frequency AC power, which is in turn supplied to the main power lines RFP. Therefore, simply laying the main power lines RFP may be sufficient to supply power to the plurality of power transmission devices 50 installed beneath the road surface RS. Of course, although there may be cases where communication lines are laid to communicate information with the power transmission devices 50, the main power lines RFP are sufficient as power supply lines. In each power transmission device 50, electric power is supplied to the mobile object 20 wirelessly via the resonance circuit 53 formed of the resonance capacitor C and the power transmission coil 51, as illustrated in FIG. 4. The direct-current power required within the power transmission device 50 is supplied from the direct-current power supply unit 60.

On the other hand, the power reception device 30 of the mobile object 20 efficiently receives the induced current that occurs in the power reception coil 31, which is magnetically coupled to the power transmission coil 51, via the power reception side resonance circuit 33, and supplies it to the load device 45 via the rectification circuit 34. The first power supply unit 41 described already above refers to this configuration in which electric power is supplied to the load device 45 in the form of direct current. On the other hand, the small amount of power used by the mobile object 20 is supplied from the second power supply unit 42 described above. In this way, wireless power transfer of all the power supplied to and used by the mobile object 20, including the power required by the power transmission device 50, is achieved using only the power supplied from the main power lines RFP.

(A2) Configuration and Operation of Direct-Current Power Supply Unit and Second Power Supply Unit:

The specific configuration and operations of the direct-current power supply unit 60 in the power transmission device 50 and the second power supply unit 42 in the power reception device 30 will now be described. The direct-current power supply unit 60 and the second power supply unit 42 have the same configuration in the present embodiment. FIG. 5 is a schematic circuit diagram of the direct-current power supply unit 60 and the second power supply unit 42. This circuit receives a high frequency and high voltage alternating-current voltage ACP as input and outputs a low direct-current voltage DCP. For the direct-current power supply unit 60, the input is high frequency and high voltage AC from the main power lines RFP. For the second power supply unit 42, the input is high frequency and high voltage AC induced in the power reception coils 31. The description below will now be described as an example of configuration for the direct-current power supply unit 60 and the second power supply unit 42, and other circuitry may readily be adopted. For example, a configuration as an isolated power supply that uses a step-down transformer to provide the necessary power supply voltage can be adopted. Both the direct-current power supply unit 60 and the second power supply unit 42 do not need to have the same configuration, but may have different circuit configurations.

Isolation capacitors CC1 and CC2 are interposed in series with the two power lines LN1 and LN2 of this circuit, respectively, and a protection diode PD1 is connected in parallel to the output side of the isolation capacitors CC1 and CC2. A rectification diode RD1 is connected in series in the forward direction to the output side of the isolation capacitor CC1, and a reverse protection diode PD2 is connected in series in the reverse direction to the output side of the isolation capacitor CC2. A Zener diode TzD and a smoothing capacitor CF are connected in parallel to the output side of both diodes PD1 and PD2. At least the circuitry including the rectification diode RD1 may be called a rectification unit RE, and the circuitry including the Zener diode TzD and the smoothing capacitor CF may be called a regulated power supply unit SP. The rectification unit RE may include the protection diode PD1 and the reverse protection diode PD2.

The direct-current power supply unit 60 and the second power supply unit 42, both having such a circuit configuration, are insulated from the high frequency and high voltage alternating-current voltage ACP by the isolation capacitors CC1 and CC2, and an alternating voltage is generated between the two power lines LN1 and LN2 according to changes in the alternating-current voltage ACP. Only when the potential on the power line LN1 side becomes higher than that on the other power line LN2, the charge stored in the isolation capacitors CC1 and CC2 is discharged via the rectification diode RD1 to charge the smoothing capacitor CF, but the part of the alternating voltage that exceeds the Zener breakdown voltage (hereafter simply referred to as the Zener voltage) of the Zener diode TzD will flow through the Zener diode TzD and be recovered via the reverse protection diode PD2, so the voltage across the smoothing capacitor CF never exceeds the Zener voltage of the Zener diode TzD. Therefore, the low direct-current voltage DCP is kept at the Zener voltage. When the alternating-current voltage ACP is reversed, the potential difference between the power line LN1 side and the power line LN2 side is kept at the forward drop voltage of the protection diode PD1, so the smoothing capacitor CF is not affected in any way. Although the direct-current power supply unit 60 and the second power supply unit 42 are connected to the high frequency and high voltage alternating-current voltage ACP, only the amount of current corresponding to the charge accumulated in the isolation capacitors CC1 and CC2 during one AC cycle flows through the power lines LN1 and LN2. Therefore, the amount of power output from the circuit may be readily adjusted by the capacitances of the isolation capacitors CC1, CC2. If a small amount of power is handled by the direct-current power supply unit 60 and the second power supply unit 42, that is, if the capacitances can be reduced, capacitors with high withstand voltage such as ceramic capacitors may be used as isolation capacitors CC1 and CC2 instead of capacitors with low withstand voltage such as film capacitors, which are often used in power supply circuits. This can be readily implemented even when the alternating-current voltage ACP is high.

Furthermore, the isolation capacitors CC1 and CC2 allow the direct-current power source unit 60 and the second power supply unit 42 to be readily isolated from the side that supplies the alternating-current voltage ACP, that is, from the main power lines RFP and the power lines of the first power supply unit 41, making the direct-current power source unit 60 and the second power supply unit 42 less susceptible to noise and other influences. As a result, the possibility of occurrence of malfunctions of control circuits and other circuits that use direct-current power supply unit 60 or the second power supply unit 42 can be reduced. In addition, the circuits can be compact in size without the need for step-down components such as a transformer for step-down from high voltages. Still furthermore, since resistors are not used in the circuit configuration, there is no loss due to resistance, and the efficiency of the circuits can be improved.

(A3) Configuration and Operation of Power Transmission Device:

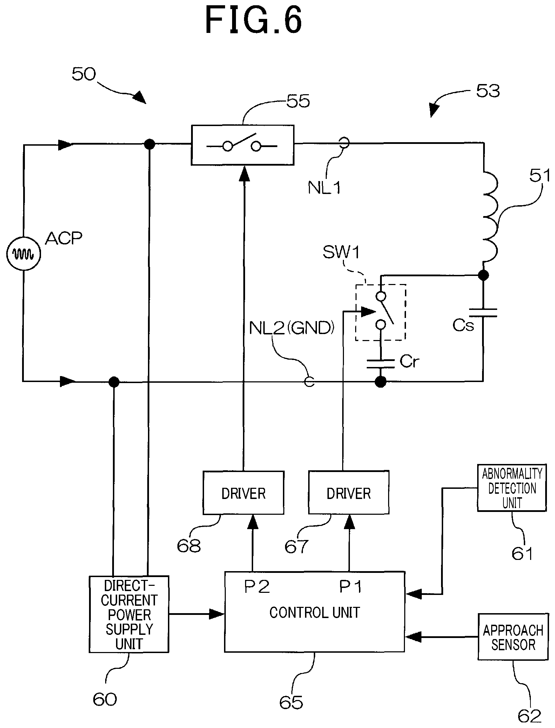

The configuration of the power transmission device 50 of the first embodiment is illustrated in Fig. 6. As illustrated in Fig. 6, this power transmission device 50 operates with an alternating-current voltage ACP applied between two power lines NL1 and NL2. The power transmission device 50 is equipped with a first capacitor Cs and a second capacitor Cr that, together with the power transmission coil 51, constitute a resonance circuit 53, a switching element SW1 that turns on and off connection of the second capacitor Cr, and the breaking unit 55 that interrupts application of the alternating-current voltage ACP to the resonance circuit 53. When the switching element SW1 is turned on (closed), the second capacitor Cr is connected in parallel with the first capacitor Cs. The configuration using this first switch SW1 corresponds to a change circuit. In the resonance circuit 53, the two capacitors are connected in series to the power transmission coil 51 to form a series resonance (SS) circuit. The frequency of the alternating-current voltage ACP is 85 kHz in the present embodiment, and the capacitances of the first capacitor Cs and the second capacitor Cr are set so that the resonance frequency of the resonance circuit 53 matches the frequency of the alternating-current voltage ACP when the switching element SW1 is turned on, that is, when the two capacitors are connected in parallel with each other and the capacitance for the inductance of the power transmission coil 51 becomes a sum of the capacities of the two capacitors. On the other hand, when the switching element SW1 is off, the resonance frequency of the resonance circuit 53, which is formed of the power transmission coil 51 and the first capacitor Cs, becomes different from the frequency of the alternating-current voltage applied by the alternating-current voltage ACP. Since the alternating current is applied between the two power lines NL1 and NL2, it is not necessary to say which is the ground line GND, but for convenience, the power line NL2 is hereinafter referred to as the ground line GND.

The power transmission device 50 includes a driver 67 that drives the first switch SW1 and a driver 68 that drives the breaking unit 55. Both drivers are connected to ports P1 and P2 for output of the control unit 65 and drive the first switch SW1 and the breaking unit 55 when ports P1 and P2 are set high. The breaking unit 55 determines whether to apply the alternating-current voltage ACP to the resonance circuit 53. The breaking unit 55 may be either reversibly or irreversibly operated, as long as it can be electrically turned on and off, such as a relay contact, fuse, or semiconductor switching element. In the first embodiment, the breaking unit 55 is configured to operate reversibly using a semiconductor switch, but it may also be configured using a component that is irreversibly turned off by an external signal. For example, the breaking unit 55 may be a thermal fuse with a heater, such that the heater heats and blows the fuse in response to a signal from the driver 68. In an alternative, the breaking unit 55 may be configured like a breaker, such that once it is turned off, it does not return to the conductive state without either a manual operation or a recovery process by the control unit 65.

The power transmission device 50 further includes an abnormality detection unit 61 and a proximity sensor 62. The abnormality detection unit 61 detects an abnormality in the power transmission device 50 and may be, for example, a current sensor that detects overheating, overcurrent or the like in the power transmission device 50. In the case of the abnormality detection unit 61 being a current sensor, the abnormality detection unit 61 is installed directly in the resonance circuit 53. In the case of the abnormality detection unit 61 being a sensor that detects, for example, overheating of the power transmission coil 51, the abnormality detection unit 61 is installed so as to be thermally coupled to a target for detection. In an alternative, the abnormality detection unit 61 may be a device that interacts with the control unit 65 and the control circuit 43 on the power reception device 30 side to detect an abnormality in the wireless power transfer system 100. For example, the device may detect that the approach of the power reception device 30 has been erroneously detected by the approach sensor 62 as an abnormality. In such a case, the power transmission device 50 may be equipped with a communication unit that communicates with the power reception device 30.

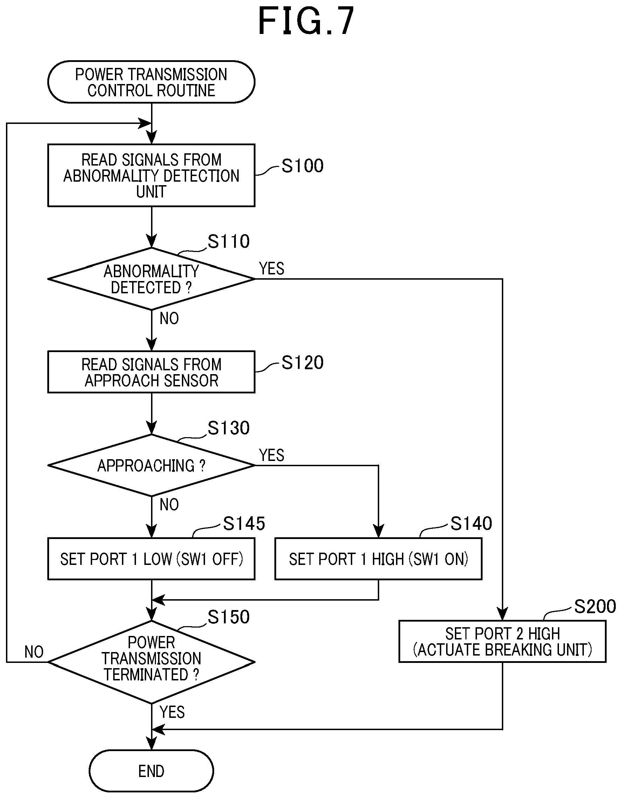

The control unit 65 controls power transmission from the power transmission device 50 to the power reception device 30. FIG. 7 illustrates a power transmission control routine to be performed by the control unit 65. This power transmission control routine is performed while the alternating-current voltage ACP is being applied to the power transmission device 50 and the direct-current power supply unit 60 is supplying direct-current power to the control unit 65. Upon initiation of this process, the control unit 65 first reads signals from the abnormality detection unit 61 (at step S100). The control unit 65 determines occurrence of an abnormality from the signals read from the abnormality detection unit 61 (at step S110), and, particularly if no abnormality is detected, the control unit 65 reads signals from the mobile object 20 via the approach sensor 62 (at step S120) and determines whether the mobile object 20 is approaching (at step S130).

If the mobile object 20 is approaching (at step S130: "YES"), the control unit 65 sets the output port P1 high and thereby turns on the first switch SW1 (at step S140). This causes the second capacitor Cr to be connected in parallel with the first capacitor Cs, so that the resonance circuit 53 transitions to the resonance state. On the other hand, if the mobile object 20 is not approaching (at step S130: "NO"), the control unit 65 sets the output port P1 low and thereby turns off the first switch SW1 (at step S145). This disconnects the second capacitor Cr from the first capacitor Cs, so that the resonance circuit 53 transitions to the non-resonance state.

Subsequently, the control unit 65 determines whether the power transmission is terminated (at step S150), and the control unit 65 returns to step S100 to continue the routine, except in cases where the operation of the power transmission device 50 is terminated. The cases where the operation of the power transmission device 50 is terminated include, for example, a case where a predefined operating time of the power transmission device 50 has elapsed, and a case where power is no longer supplied from the direct-current power supply unit 60.

During repetition of steps S100 to S150, if the determination at step S110 is "YES", that is, if it is determined that some kind of abnormality has occurred by reading the output from the abnormality detection unit 61, the control unit 65 sets the port P2 high to actuate the breaking unit 55, leading to a transition to a non-conductive state (at step S200). As a result, the alternating-current voltage ACP is not applied to the resonance circuit 53. Thus, in the event of occurrence of some kind of abnormality, such as overheating of the power transmission coil 51, the breaking unit 55 will actuate, so that the alternating-current voltage ACP is not be applied to the resonance circuit 53, and no large current due to resonance flows. This can prevent a large power load from being imposed on the main power supply device 70 due to occurrence of an abnormality, which can prevent occurrence of issues such as a failure of the main power supply device 70.

As one of these abnormalities, despite the fact that the power reception coil 31 of the mobile object 20 is not magnetically coupled to the power transmission coil 51, the power transmission device 50 may determine that the power reception coil 31 is in close proximity to the power transmission coil 51, which may cause the resonance circuit 53 to be placed in the resonance state. Such an abnormality may occur due to a failure of the approach sensor 62, or the like. In the present embodiment, in this case, detection of an abnormality using the abnormality detection unit 61 (at step S110) causes the breaking unit 55 to actuate to disconnect the power supply to the resonance circuit 53, which can prevent a large current from flowing through the resonance circuit 53. This can suppress occurrence of a failure of the main power supply device. Therefore, of the plurality of power transmission devices 50, any power transmission device 50 in which an abnormality has occurred can be deactivated, and the other power transmission devices 50 are allowed to be used continuously. As a result, there is no need to immediately stop the mobile object 20. This can suppress occurrence of an issue such that a failure of one of the plurality of power transmission devices 50 causes a failure of the main power supply device 70, disabling power transfer to the mobile object 20.

In the present embodiment, when an abnormality occurs, the breaking unit 55 is actuated to cease the application of voltage to the resonance circuit 53, but the power supply to the direct-current supply unit 60 is continued. This allows the control unit 65 to continue operating, thus allowing actuation of the breaking unit 55 via the driver 68 to continue (at step S200). Meanwhile, the details of the abnormality may be notified externally or displayed on the display unit included in the power transmission device 50, thereby providing a notification of occurrence of the abnormality. It is also useful to use a normally open relay or semiconductor switch in the breaking unit 55 so that, even when alternating-current voltage ACP is supplied to the power transmission device 50, the power supply to the resonance circuit 53 is disconnected by default. In this case, the control unit 65, which is supplied with electric power from the direct-current power supply unit 60, actuates the breaking unit 55 via the driver 68 to close the normally open contact, thereby enabling power supply using the resonance circuit 53. With this configuration, in the event where the power supply to the control unit 65 or driver 68 is disconnected, the breaking unit 55 can return to the open state to disconnect the power supply to the resonance circuit 53 of the power transmission device 50 in which an abnormality has been detected, thereby implementing fail-safe.

The abnormalities assumed to be detected by the abnormality detection unit 61 may include, for example, overheating of the power transmission coil 51, a state in which the current flowing through the resonance circuit 53 is an overcurrent, or a case in which an abnormality on the mobile object 20 side is detected using communications.

B. Second Embodiment:

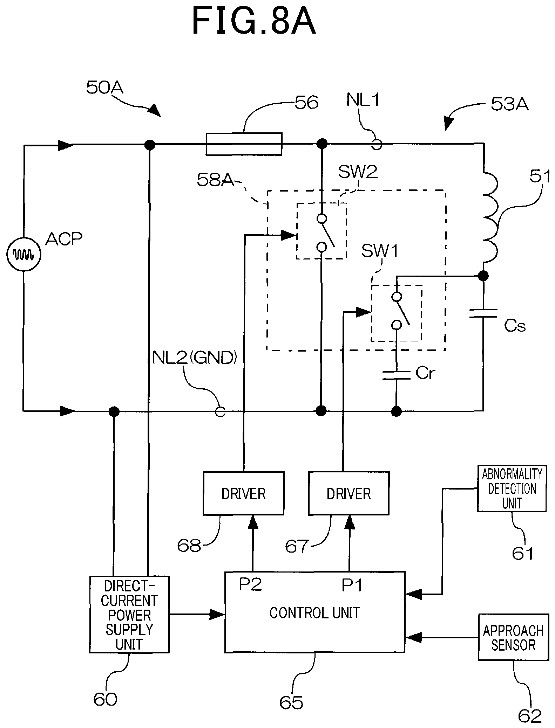

A power transmission device 50A according to a second embodiment will now be described. FIG. 8A is a circuit diagram of the power transmission device 50A. The power transmission device 50A of the second embodiment has the same configuration as in the first embodiment, except that it is equipped with an overcurrent-fusing type fuse 56 instead of the breaking unit 55, and is equipped with a switching unit 58A. The switching unit 58A is equipped with a first switch SW1 that switches the resonance state as described in the first embodiment, and a second switch SW2 that short-circuits the output side of the fuse 56 with the ground line GND. When the mobile object 20 approaches, the configuration of the resonance circuit 53 for wireless power transfer to the power reception device 30 is the same as in the first embodiment. In the second embodiment, the resonance frequency of the resonance circuit 53A is implemented by switching the connection between the first capacitor Cs and the second capacitor Cr. The configuration of the change circuit is treated as part of the switching section 58A in the second embodiment and subsequent embodiments.

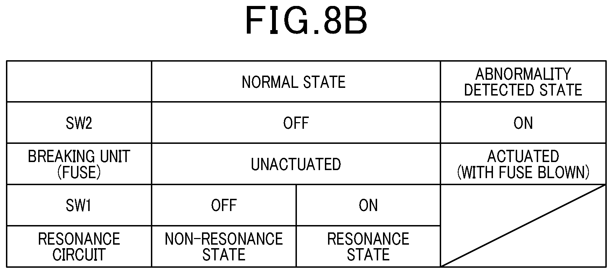

Fig. 8B illustrates the on/off state of each of the first and second switches SW1 and SW2 and the operational state of the power transmission device 50A. As illustrated, the second switch SW2 is off by default. In this state (normal state), the fuse 56 is unactuated and the current required by the resonance circuit 53 is passed. In the event of occurrence of an abnormality being detected, the control unit 65 sets the port P2 high and turns on the second switch SW2 via the driver 68. Since the connection point between the fuse 56 and the power transmission coil 51 is short-circuited to the ground line GND, the short-circuit current (hereinafter referred to as the fusing current) flows through the fuse 56, and the overcurrent-blowable type fuse 56 is blown. As a result, the fuse 56 is irreversibly turned off and no alternating voltage ACP is applied to the resonance circuit 53. As in the first embodiment, in normal operation, when the first switch SW1 is turned on, the resonance circuit 53 is placed in the resonance state, and when the first switch SW1 is turned off, the resonance circuit 53 is placed in the non-resonance state.

In the power transmission device 50A of the second embodiment described above, when the control unit 65 determines that an abnormality has occurred, the control unit 65 sets the port P2 high and turns on the second switch SW2 via the driver 68. As a result, a short-circuit current flows through the fuse 56, and the fuse 56 blows. In response thereto, the short-circuit current ceases, and the power supply from the alternating current voltage ACP to the resonance circuit 53 is disconnected. As in the first embodiment, this can prevent occurrence of the situation where an overcurrent continues to flow through the resonance circuit 53 due to an abnormality in the power transmission device 50A. Therefore, occurrence of defects in the main power supply device 70 due to an overload exceeding an acceptable range to the main power supply device 70 caused by the overcurrent can be suppressed. In the second embodiment, since the fusing current that blows the fuse 56 does not flow through the power transmission coil 51, there is no risk of magnetic flux leakage when the fuse 56 blows.

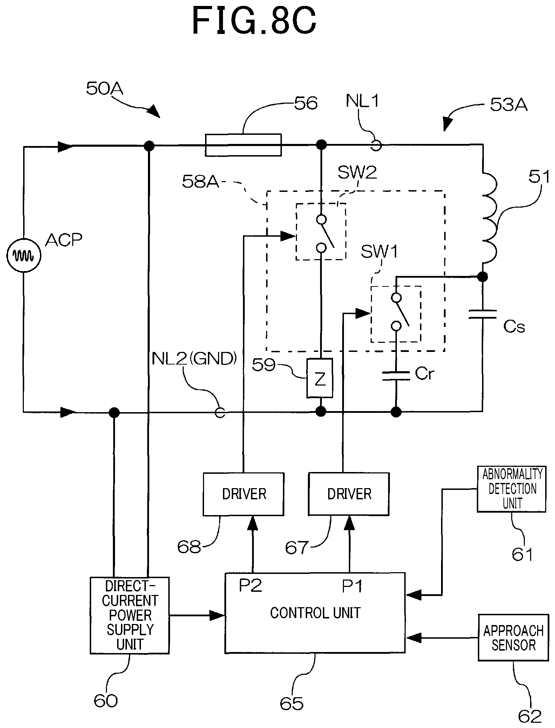

In the circuit diagram of the second embodiment, as illustrated in FIG. 8C, a current limiter 59 with a predefined impedance Z may be included in the flow path of the fusing current that flows when the second switch SW2 is turned on. In the circuit illustrated in FIG. 8C, when the control unit 65 detects an abnormality and then turns on the second switch SW2, the fuse 56 is blown by the fusing current flowing through the current limiter 59. Therefore, the same actions and effects as in the second embodiment can be achieved. In addition, the magnitude of the fusing current can be limited by the current limiter 59 to a current value sufficient to blow the fuse 56, which allows the fusing current to be lower than the short-circuit current. This facilitates the design that can prevent the main power supply device 70 from being overloaded when the fuse 56 blows. The current limiter 59 may be a single element such as a resistive element R or a capacitor C, or may be a single coil L, because once the fuse 56 blows, no more current can flow. Of course, a combination of these elements may be used to adjust the time variation of the fusing current to the desired profile. Limiting the maximum value of the inrush current value of the fusing current by using resistors or coils, or by combining various elements, may not only reduce the burden on the main power supply device 70, but also suppress the possibility of welding of the second switch SW2.

C. Third embodiment:

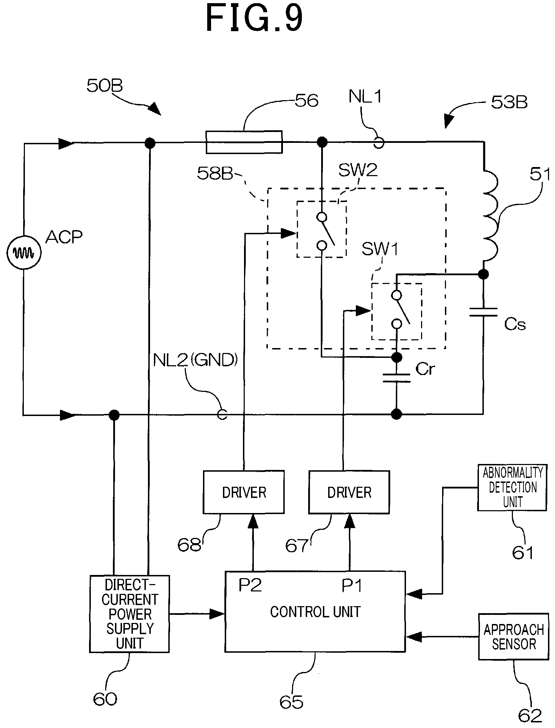

A power transmission device 50B according to a third embodiment will now be described using FIG. 9. The power transmission device 50B of the third embodiment has almost the same configuration as the power transmission device 50A of the second embodiment, except for the connectional configuration of the switching unit. This power transmission device 50B differs from that of the second embodiment in that the second switch SW2 of the switching unit 58B is configured to connect the output side of the fuse 56 not directly to the ground line GND, but through the second capacitor Cr to the ground line GND. The relationship between the operational state of the power transmission device 50B and the on/off state of each of the first and second switches SW1 and SW2 is the same as that illustrated in FIG. 8B with respect to the second embodiment.

In the third embodiment, the magnitude of the fusing current that flows through the fuse 56 when the second switch SW2 is on is determined by the impedance of the second capacitor Cr at the frequency of the alternating-current voltage ACP. Of course, as illustrated in FIG. 8B, in normal operation, when the first switch SW1 is turned on, the current for power transfer to the mobile object 20 using the resonance of the resonance circuit 53 flows through the fuse 56. The capacity of the second capacitor Cr is set to meet the following condition:

$$\text{fusing current} > \text{rated current during power transfer} \qquad (1)$$

Since the impedance of the second capacitor Cr that defines the fusing current depends not only on the capacitance of the second capacitor Cr but also on the frequency of the alternating-current voltage ACP, it is possible to meet the above condition (1). In order to balance between the above condition (1) with optimization of the relationship between the capacitance (Cs + Cr) to place the resonance circuit 53 in the resonance state by turning on the first switch SW1 and the capacitance (Cs) to place the resonance circuit 53 in the non-resonance state by turning off the first switch SW1, the second capacitor Cr may be formed of a plurality of capacitors connected in series, and the fusing current may flow through only some of those capacitors when the second switch SW2 is turned on. When a plurality of capacitors are connected in parallel, a c-type contact may be used as the second switch SW2, and when the a-contact is on, all the capacitors are connected in parallel with each other and the resonance circuit 53B is placed in the resonance state, and when the b-contact is switched on, the fusing current may flow through only some of the plurality of capacitors.

The power transmission device 50B of the third embodiment having such a configuration, can exhibit almost the same actions and effects as in the second embodiment. Furthermore, since the fusing current can be made lower than the short-circuit current, the load on the main power supply device 70 can be reduced. In addition, the fusing current to blow the fuse 56 can be set to a predefined value.

D. Fourth Embodiment:

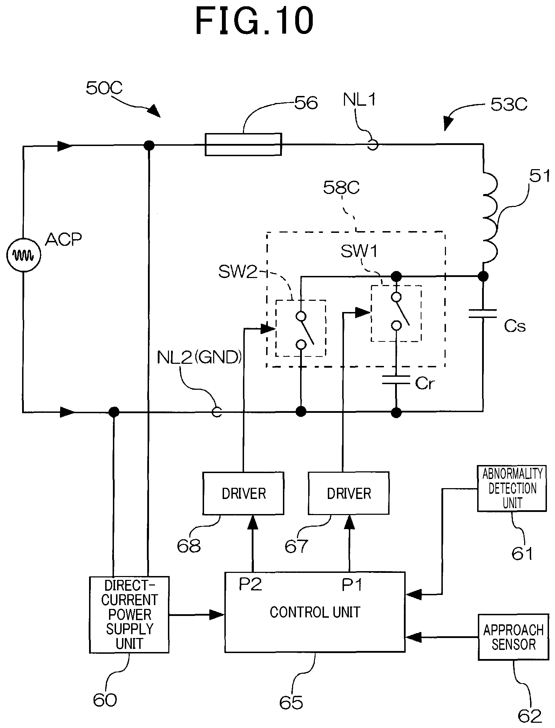

A power transmission device 50C according to a fourth embodiment will now be described using FIG. 10. The power transmission device 50C of the fourth embodiment differs from the power transmission device 50 of each of the second and third embodiments in the connectional configuration of the switching unit. In this power transmission device 50C, the second switch SW2 of the switching unit 58C is not connected to the output side of the fuse 56, but is provided in a position to connect/disconnect the ground line GND with/from the connection point between the power transmission coil 51 of the resonance circuit 53C and the first capacitor Cs. The relationship between the operational state of the power transmission device 50C and the on/off state of each of the first and second switches SW1 and SW2 is the same as that illustrated in FIG. 8B with respect to the second embodiment.

In the fourth embodiment, when an abnormality is detected and the control unit 65 sets the port P2 high to turn on the second switch SW2 via the driver 68, a fusing current flows through the power transmission coil 51. The magnitude of the fusing current that flows through the fuse 56 when the second switch SW2 is turned on is defined by the impedance of the power transmission coil 51 at the frequency of the alternating-current voltage ACP. Of course, as illustrated in FIG. 8B, in normal operation, when the first switch SW1 is turned on, the current for power transfer to the mobile object 20 using the resonance of the resonance circuit 53 flows through the fuse 56. Therefore, the reactance of the power transmission coil 51 is set to meet the following condition:

$$\text{fusing current} > \text{rated current during power transfer} \qquad (1)$$

As described in the third embodiment, in order to balance with the condition for switching between the resonance state and non-resonance state of the resonance circuit 53C, it is sufficient to provide the power transmission coil 51 with taps at different numbers of windings, connect the second switch SW2 to one of these taps, and pass the fusing current through a portion of the power transmission coil 51 when the second switch SW2 is turned on, thereby providing an appropriate impedance of the power transmission coil 51 that determines the fusing current.

The power transmission device 50C of the fourth embodiment, which has such a configuration, exhibits almost the same actions and effects as in the third embodiment.

E. Fifth Embodiment:

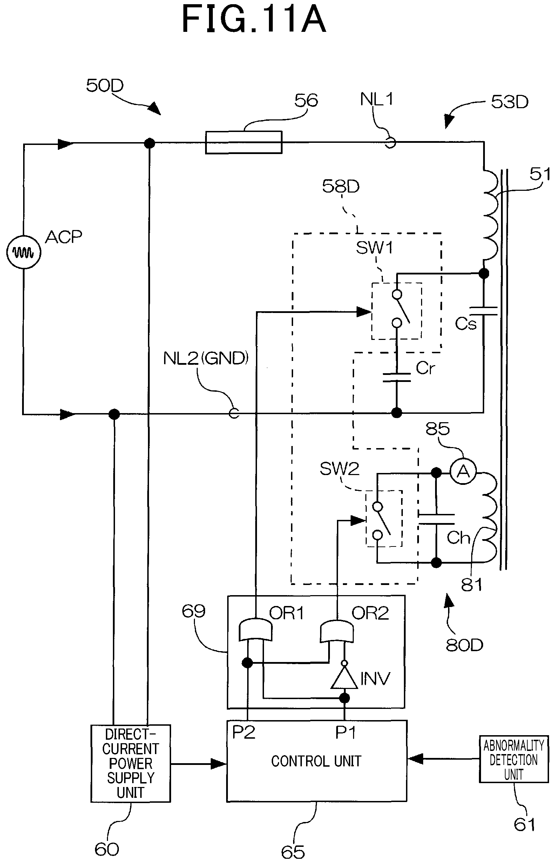

A power transmission device 50D according to a fifth embodiment will now be described using FIG. 11A. The power transmission device 50D of the fifth embodiment differs from the power transmission device 50 described above in that the power transmission device 50D uses a relay circuit 80D, uses a driver 69 instead of the drivers 67 and 68, and uses a current sensor 85 provided in the relay circuit 80D instead of the approach sensor 62. The relay circuit 80D of the power transmission device 50D is equipped with a relay coil 81 that is close coupled with the power transmission coil 51, a third capacitor Ch that forms a resonance circuit with the relay coil 81, a second switch SW2 that short-circuits both ends of the relay coil 81, and a current sensor 85 that detects the resonance current. The relay circuit 80D is provided to detect the approach of the mobile object 20 equipped with the power reception coil 31. The approach of the power reception coil 31 is detected by an increase or decrease in the resonance current detected by the current sensor 85. For the sake of illustration, although the connection from the current sensor 85 to the control unit 65 is not shown, the control unit 65 reads the output of the current sensor 85 to detect the approach of the mobile object 20. That is, the current sensor 85 serves as the approach sensor. In FIG. 11A, the state in which these coils are magnetically coupled with each other is indicated by two parallel straight lines.

In the present embodiment, the second switch SW2 is provided in the relay circuit 80D. Therefore, the switching unit 58D is a circuit that includes the first switch SW1 connected to the second capacitor Cr for resonance of the resonance circuit 53D and the second switch SW2 provided in the relay circuit 80D. States of the first and second switches SW1 and SW2 that constitute the switching unit 58D are switched in response to the output of the driver 69, which depends on the states of the ports P1 and P2 of the control unit 65.

As illustrated, the driver 69 of the present embodiment is equipped with two OR gates OR1 and OR2 and an inverter INV connected to one of the input terminals of the OR gate OR2. The port P1 of the control unit 65 is connected to one of the two input terminals of the OR gate OR1, and the port P2 of the control unit 65 is connected to the other of the two input terminals of the OR gate OR1. The port P1 of the control unit 65 is connected to one of the two input terminals of the OR gate OR2, and the port P2 is connected to the other of the two input terminals of the OR gate OR2 through the inverter INV. As a result, when the port P2 is high (H), the two outputs of the driver 69 will become high regardless of the state of port P1, and the first and second switches SW1 and SW2 will be turned on. On the other hand, when the port P2 is low (L), the two outputs of the driver 69 will become exclusively high and low, or low and high, depending on the state (high/low) of the port P1.

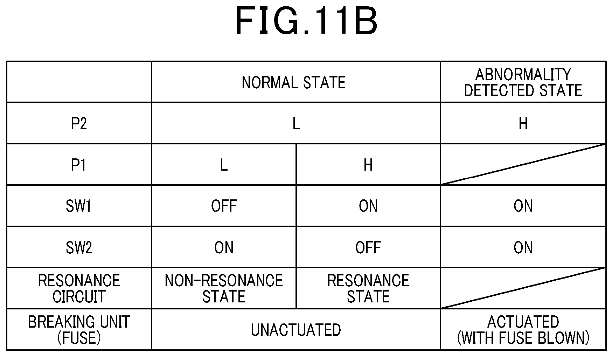

The switching unit 58D of the power transmission device 50D is, as in the above embodiments, formed of the first and second switches SW1 and SW2. The first and second switches SW1 and SW2 of the switching unit 58D are switched by the control unit 65. FIG. 11B illustrates the states of the ports P1 and P2 of the control unit 65 and the on/off states of the first and second switches SW1 and SW2, and thus the states of the power transmission device 50D. As illustrated, in normal operation, the port P2 of the control unit 65 is kept low. At this time, when the port P1 is low, the first switch SW1 is off and the second switch SW2 is on, and the resonance circuit 53D is kept in a standby state. When the port P1 is high, the first switch SW1 is on and the second switch SW2 is off, and the resonance circuit 53D is in the resonance state. Since the inverter INV is provided, the outputs of the two OR gates OR1 and OR2 are exclusively on and off, or off and on.

In the event of an abnormality being detected, the control unit 65 sets the port P2 high. As a result, the two outputs of the driver 69 are both set high, so that the first and second switches SW1 and SW2 are both on. In this state, a large current flows through the resonance circuit 53D, causing the fuse 56 to be blown. When the second switch SW2 is turned on, the fuse 56 is blown. Therefore, even if a short-circuit failure occurs in the second switch SW2, such an abnormal situation can be handled. At this time, the fusing current flows through the power transmission coil 51, causing generation of a large magnetic flux until the fuse 56 blows. However, since an induced current is generated in the relay coil 81 to cancel the magnetic flux emitted from the power transmission coil 51, the leakage magnetic flux will be canceled.

With the power transmission device 50D of the fifth embodiment described above, use of the relay circuit 80D allows the approach of the mobile object 20 to be reliably detected in relation to the power reception coil 31. In addition, there is no need for the magnet 24 or the like to detect the mobile object 20, and there is no risk of false detection due to another magnet or the like. The other actions and effects are the same as those of each of the first to fourth embodiments.

F. Sixth Embodiment:

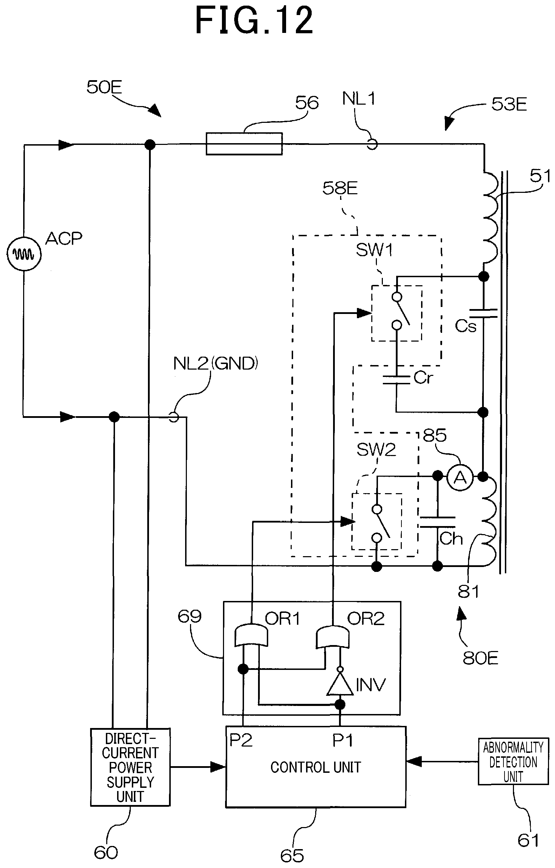

A power transmission device 50E according to a sixth embodiment will now be described using FIG. 12. In the power transmission device 50E of the sixth embodiment, as illustrated, a relay circuit 80E is used as in the fifth embodiment. As s difference, this relay circuit 80E is not electrically isolated from the resonance circuit 53E, but forms a single closed circuit therewith. Apparently, the resonance circuit 53E and the relay circuit 80E are loads connected in series to the alternating-current voltage ACP. The configuration of the switching unit 58E and the relay circuit 80E in the power transmission device 50E, the internal configuration of the driver 69, the connection between the output of the driver 69 and the first and second switches SW1 and SW2, and use of the current sensor 85 instead of the approach sensor 62 are similar to those in the fifth embodiment. The operations in the sixth embodiment are also the same as in the fifth embodiment illustrated in FIG. 11B.

The power transmission device 50E of the sixth embodiment described above can exhibit the same actions and effects as in the fifth embodiment. In addition, the relay circuit 80E is directly connected to the resonance circuit 53E, which leads to a simplified configuration.

G. Seventh Embodiment and its Modification:

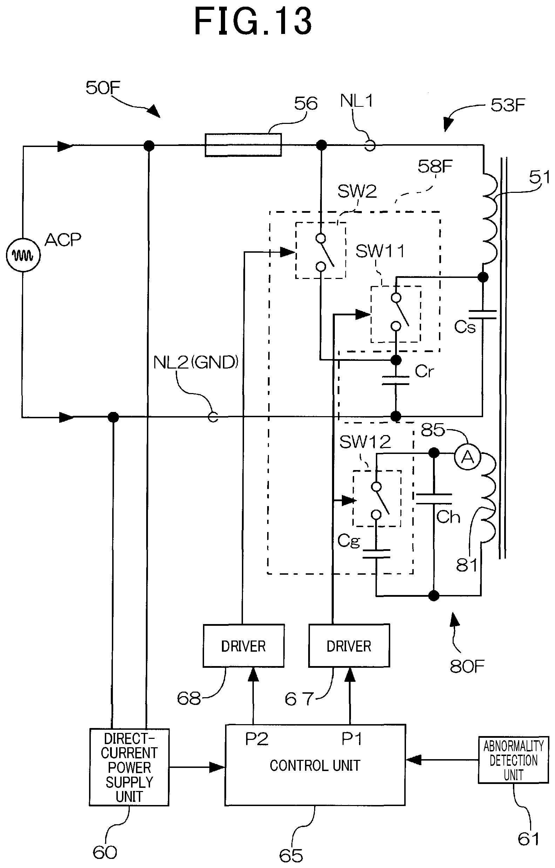

In the fifth and sixth embodiments described above, the relay circuits 80D and 80E, where the second switch SW2 in the relay circuit 80D/80E is turned on (placed in the conductive state) simultaneously with the first switch SW1 in the resonance circuit 53D/53E, thereby causing the fuse 56 to be blown by passing the fusing current through the fuse. In an alternative, the fuse 56 may be blown independently of the operation of the relay circuit 80D. Fig. 13 illustrates such a circuit configuration of the power transmission device 50F of the seventh embodiment. In this example, the resonance circuit 53F and the switching unit 58F have the same configuration as the resonance circuit 53B and the switching unit 58B of the third embodiment, respectively.

On the other hand, in this embodiment, the relay circuit 80F includes a fourth capacitor Cg in addition to the third capacitor Ch as a resonance capacitor for the relay circuit 80F. In synchronization with switching of the resonance circuit 53F between the resonance and non-resonance states, the relay circuit 80F is also switched between the resonance and non-resonance states. To this end, a main first switch SW11 is provided in the resonance circuit 53F, and an auxiliary first switch SW12 is provided in the relay circuit 80F. The main first switch SW11 and the auxiliary first switch SW12 are turned on (placed in the conductive state) via the driver 67 by the control unit 65 setting its port P1 active of high. At this time, the capacity of the resonance capacitor of the resonance circuit 53F becomes a sum of the capacities of the first capacitor Cs and the second capacitor Cr, and similarly, the capacity of the resonance capacitor of the relay circuit 80F becomes a sum of the capacities of the third capacitor Ch and the fourth capacitor Cg. In the state where both the switches SW11 and SW12 are on, each of the resonance circuit 53F and the relay circuit 80F is placed in the resonance state. When the main first switch SW11 and the auxiliary first switch SW12 are turned off (placed in the non-conductive state), each of the resonance circuit 53F and the relay circuit 80F is placed in the non-resonance state. The main first switch SW11 and the auxiliary first switch SW12 are turned off and off according to whether the approach of the mobile body 20 has been detected using the current sensor 85. When the mobile body 20 approaches, each of the resonance circuit 53F and the relay circuit 80F is placed in the resonance state, and power is then supplied from the power transmission device 50F to the mobile object 20.

In the event that the abnormality detection unit 61 determines that some kind of abnormality has occurred in power transfer from the power transmission device 50F to the mobile object 20, the second switch SW2 is turned on to generate a fusing current and blow the fuse 56, in the same manner as in the third embodiment. The relationship between the on/off states of the first switch SW1 and the second switch SW2 and the operational state of the power transmission device 50F is the same as that illustrated in FIG. 8B.

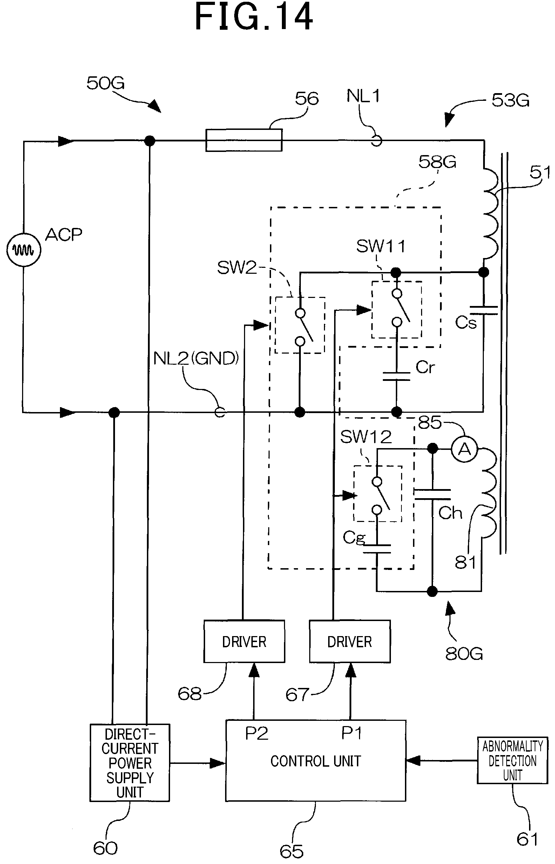

In this manner, even with the relay circuit 80F, regardless of the operation of the relay circuit 80F, in the event of occurrence of an abnormality, an excessive current can be prevented from flowing through the resonance circuit 53F by blowing the fuse 56, thus suppressing the possibility of occurrence of a failure of the power transmission device 50F or the main power supply device 70. There are various other possible circuit configurations for using relay circuits. As an example modification, the configuration of the power transmission device 50G illustrated in FIG. 14 is also available. In the configuration illustrated, the relay circuit 80G is provided that is the same as the relay circuit 80F of the seventh embodiment already described, and the power transmission device 50G has the same circuit configuration as in the fourth embodiment described above. In this power transmission device 50G, the second switch SW2 of the switching unit 58G is not connected to the output side of the fuse 56, but is provided in a position to connect/disconnect the ground line GND with/from the connection point between the power transmission coil 51 of the resonance circuit 53G and the first capacitor Cs. The relationship between the on/off states of the first switch SW1 (in this example, SW11 and SW12) and the second switch SW2 and the operational state of the power transmission device 50F is the same as that illustrated in FIG. 8B. Such a circuit configuration can also exhibit the same actions and effects as in the fourth embodiment.

H. Eighth Embodiment and its Modification:

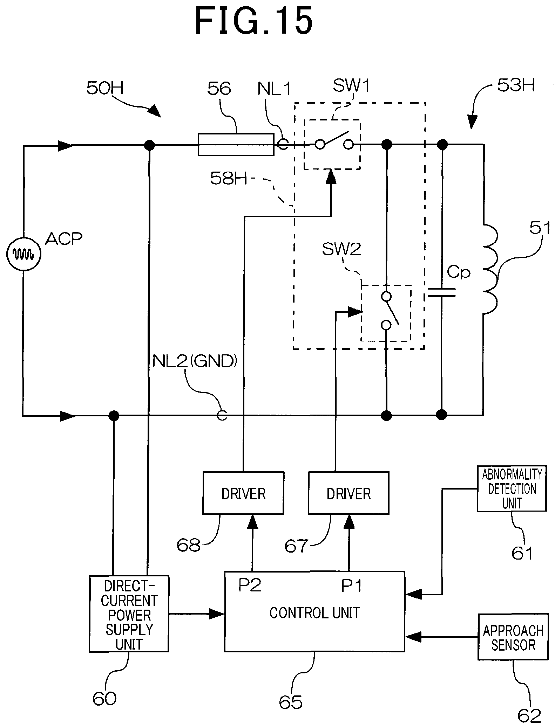

A power transmission device 50H according to an eighth embodiment will now be described. FIG. 15 is a circuit diagram of the power transmission device 50H. In each of the first to seventh embodiments described above, the resonance circuit 53, etc. is configured as a series resonance (SS) circuit. In the eighth embodiment, the resonance circuit is configured as a parallel resonance circuit. The power transmission device 50H of the eighth embodiment is different from the circuit configuration of the second embodiment. The resonance circuit 53H is configured as a parallel resonance (P) circuit formed of the power transmission coil 51 and a parallel resonance capacitor Cp connected in parallel with the power transmission coil 51. In the power transmission device 50H of the eighth embodiment, the first switch SW1, which is a constituent of the switching unit 58H, is provided on the output side of the fuse 56 along the power line NL1, and the second switch SW2, which is a constituent of the switching unit 58H, is provided on the output side of the first switch SW1, connected in parallel with the resonance circuit 53H and connected between the power lines NL1 and NL2.

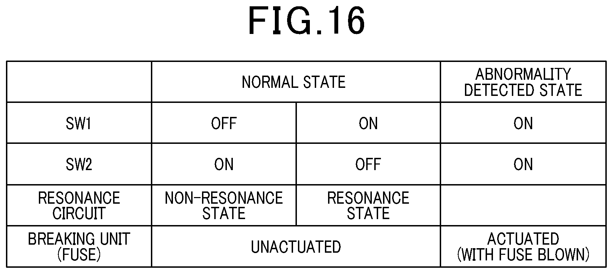

In the power transmission device 50H of the eighth embodiment, the control unit 65 turns the first switch SW1 on and off via the driver 68, and turns the second switch SW2 on and off via the driver 69. FIG. 16 illustrates the on/off states of the first and second switches SW1 and SW2 controlled by the control unit 65 and the operational state of the power transmission device 50H. As illustrated, when no abnormality is detected by the abnormality detection unit 61, that is, in normal operation, the first and second switches SW1 and SW2 are exclusively turned on and off, or off and on, respectively. When the approach sensor 62 determines that the mobile object 20 is not approaching, the first switch SW1 is kept off and the second switch SW2 is kept on. In this state, the alternating-current voltage ACP is not applied to the resonance circuit 53H, and the ends of the power transmission coil 51 are short-circuited, resulting in no power transmission to the power reception device 30 via the resonance circuit 53H. On the other hand, when the approach sensor 62 determines that the mobile object 20 is approaching, the first switch SW1 is turned on and the second switch SW2 is turned off. In this state, the alternating-current voltage ACP is applied to the resonance circuit 53H, and the ends of the power transmission coil 51 are not short-circuited, resulting in generation of power transmission to the power reception device 30 via the resonance circuit 53H. In this state, since whether the approach sensor 62 has detected the approach of the mobile object 20, one of the first and second switches SW1 and SW2 is off, the power line NL1 on the output side of the fuse 56 never is short-circuited to the ground line GND.

In the event that the abnormality detection unit 61 detects some kind of abnormality, the control unit 65 sets both ports P1 and P2 high and turns on both the first and second switches SW1 and SW2. As a result, the connection point between the fuse 56 and the power transmission coil 51 is short-circuited to the ground line GND, which causes a fusing current to flow through the fuse 56, and the overcurrent fusing type fuse 56 blows. Since no fusing current flows through the power transmission coil 51, no leakage magnetic flux is generated when the fuse blows. In the power transmission device 50H of the eighth embodiment, the resonance circuit 53H is configured as a parallel resonance circuit, allowing the characteristics of the parallel resonance circuit to be utilized. In addition, when the mobile object 20 is not approaching, the first switch SW1 is off. Therefore, there is no need to change the resonance frequency of the resonance circuit 53H. That is, the power transmission device 50H of the eighth embodiment can exhibit the same actions and effects as in the second embodiment. In addition, there is no need to provide the second capacitor Cr, which simplifies the circuit configuration.

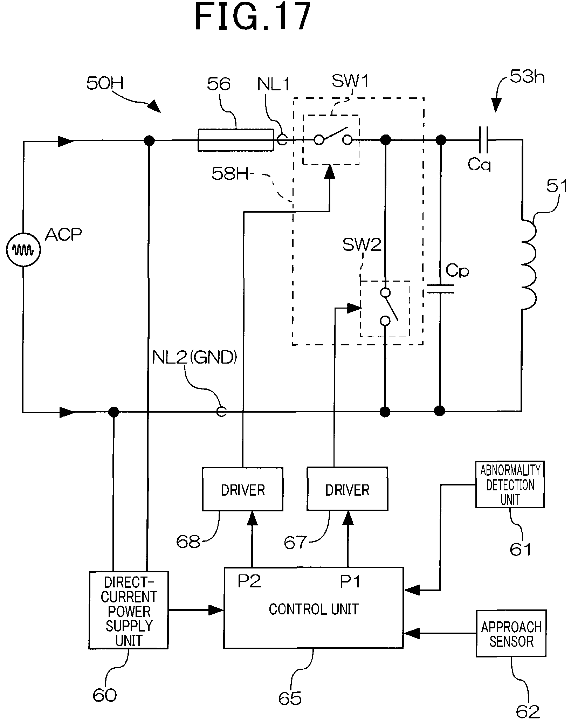

Various configurations can be adopted for the resonance circuit. For example, as illustrated in FIG. 17, the resonance circuit may have a series-parallel resonance (SP) circuit configuration including a parallel resonance capacitor Cp and a series resonance capacitor Cq connected in series with the power transmission coil 51. Alternatively, the resonance circuit may have a parallel-series resonance (PS) circuit configuration including the series resonance capacitor Cq disposed on the power source side, or a series-parallel-series (SPS) resonance circuit configuration including series resonance capacitors disposed on both sides. In any case, the operation of the switching unit 58h is the same as that illustrated in FIG. 16.

In each of the eighth embodiment (FIG. 15) and its modification (FIG. 17) described above, since the fuse 56 is blown by turning on both the first switch SW1 and the second switch SW2, the fusing current is a short-circuit current. As illustrated in the modification of the second embodiment (FIG. 8C), the fusing current may be set to a current value that is less than the short-circuit current but sufficient to blow the fuse by providing a current limiter 59 with a predefined impedance Z in the short-circuit current path.

I. Other Embodiments:

(1) This disclosure may be implemented in embodiments other than those described above. A first aspect provides a wireless power transmission device. This power transmission device operates by being supplied with electric power from a main power supply device, and transmits electric power wirelessly to a power reception device installed on an object to be powered. The power transmission device includes: a resonance circuit that includes a power transmission coil magnetically coupled to a power reception coil included in the power reception device; an abnormality detection unit that detects an abnormality related to power transfer to the power reception device; a breaking unit that is provided in either or both of power lines for supplying alternating-current power from the main power supply device to the resonance circuit and that is capable of placing the power lines in a non-conductive state; a control unit that, when the abnormality detection unit detects the abnormality, actuates the breaking unit to disconnect the power supply from the main power supply device to the resonance circuit. With this configuration, since the breaking unit is actuated when an abnormality occurs, the supply of alternating current to the resonance circuit can be disconnected, thereby avoiding occurrence of a large current due to resonance. This can suppress occurrence of issues such as the main power supply device failing due to a large power load being imposed on it due to occurrence of an abnormality.

The various abnormalities that cause the blocking unit to operate may include overheating of the power transmission device, overcurrent in the resonance circuit, and abnormality notifications from the reception device. For example, it may be determined that the power transmission device is overheating not only when the power transmission coil reaches a preset temperature or higher or when the temperature rise per hour exceeds a preset value, but also when the resonance capacitor reaches a preset temperature or higher or when the environmental temperature inside the power transmission device reaches a preset threshold value or higher.

To detect an overcurrent in the resonance circuit as an abnormality, a current sensor may be installed where a current flows during resonance. Of course, there is no need to install such a current sensor in the circuit. Since the current flowing in the resonance circuit is alternating current, an indirect current sensor that uses electromagnetic induction may be used. This can suppress the possibility of the current sensor itself failing due to an overcurrent. When using a relay circuit equipped with a coil that is close coupled to the power transmission coil, an overcurrent may be detected by a current sensor installed in the relay circuit. In addition, it is also possible to determine that an abnormality has occurred when the logic deviates or fails, such as when the circuit is switched to the resonance state despite no mobile object being approaching. It is also possible to adopt a configuration in which it is determined that an abnormality has occurred when a diagnosis computer of the wireless power transfer system provides a notification that an abnormality has been detected in the system.

(2) In such a configuration, the breaking unit may include at least one of a fuse, a relay contact, and a semiconductor switching element, and the power lines may be placed in a non-conductive state by blowing the fuse, opening the relay contact, or turning off the semiconductor switching element. With this configuration, it is possible to readily construct the breaking unit using existing circuit components. Such a breaking unit may be reversibly or irreversibly actuated. For example, it may be a fuse, relay, or semiconductor switching element that can turn on and off the supply of high-frequency power. Even in the case of the breaking unit being actuated irreversibly, such as a fuse, the breaking unit is not limited to those actuated by using a current flowing through a circuit, such as an overcurrent blowable type. The breaking unit may also be of the type that irreversibly turns off in response to an external signal. The breaking unit may be those configured to blow the fuse by heating a heater in response to a signal from a driver, such as a thermally blowable type fuse. Alternatively, the breaking unit may include a breaker that, once turned off, does not return to the conductive state without a manual operation or a recovery process by the control unit. In the case of using, as the breaking unit, those actuated reversibly, such as a relay or semiconductor switch, it is also preferable to use a normally open relay or semiconductor switch to implement a fail-safe. In the case of using, as the breaking unit, those actuated irreversibly, such as an overcurrent blowable type fuse, there is an advantage that the circuit configuration can be simplified.

(3) In the configuration (1) or (2), a switching unit may be further included that switches between a resonance state in which the resonance circuit transmits electric power to the power reception device, a non-resonance state in which the resonance circuit does not transmit electric power to the power reception device, and a breaking operation state in which a breaking current having a predefined magnitude is applied to actuate the breaking unit, wherein in an event of the abnormality being detected, the control unit drives the switching unit to switch to the breaking operation state. With this configuration, the switching unit may be provided to switch between the resonance state, the non-resonance state, and the breaking operation state. Commonly, in the resonance circuit, an abnormal state such as occurrence of an excessive current is more likely to occur when the resonance circuit is in the resonance state. Therefore, switching between the resonance state/non-resonance state and the breaking operation state using a single switching unit can contribute to simplifying the configuration and ensuring stable operation. The switching unit can be readily implemented by combining states of a plurality of switching elements, relays, or other contacts. Of course, the switching may also be implemented by a discrete circuit configuration or by means of logic operations using a computer. In a case where an overcurrent blowable type fuse is used as the breaking unit to implement the breaking operation state, the breaking current is a fusing current for blowing the fuse. In a case where a relay contact or a semiconductor switching element is used as the breaking unit, the relay itself may be actuated using the breaking current, or the semiconductor switching element such as a FET may be actuated using the voltage generated by the breaking current. In the latter case, a flip-flop circuit may be configured such that the flip-flop circuit is set or reset by the breaking current flowing, and even after the breaking current is lost, the set or reset state of the flip-flop circuit is maintained. With such a configuration, the breaking operation state can be maintained even if the breaking current flows for a short time.

(4) In any one of the configurations (1) to (3), the resonance circuit may include a capacitor that determines a resonance state together with the power transmission coil, and a change circuit that changes at least one of an inductance of the power transmission coil and a capacitance of the capacitor, and the switching unit may switch between the resonance state and the non-resonance state by the change circuit changing at least one of the inductance of the power transmission coil and the capacitance of the resonance capacitor. With this configuration, the resonance circuit may be readily switched between the resonance state and the non-resonance state. The capacitance of the capacitor may be readily changed by arranging a plurality of capacitors in parallel or in series and turning the connection between them on and off. Alternatively, an electronically variable capacitance capacitor may be used. The inductance of the power transmission coil may be changed by providing a plurality of power transmission coils and switching the connection between them, or by providing a plurality of taps on the power transmission coil and switching between the taps. In a case where the power transmission coil is equipped with a magnet such as a ferrite core, the length of the ferrite core inserted into the power transmission coil may be changed to change the inductance.

(5) In the configuration (3) or (4), the switching unit may include a capacitor in a circuit through which the breaking current flows. With this configuration, the magnitude of the breaking current can be regulated by the impedance of the capacitor, with respect to the high-frequency power for resonance.

(6) In this case, the capacitor may be a capacitor that determines the resonance state of the resonance circuit. With this configuration, the capacitor for resonance and the capacitor for regulating the breaking current may be used together, contributing to simplification of the configuration.

(7) In the configuration (3) or (4), the switching unit may include a coil in a circuit through which the breaking current flows. With this configuration, the magnitude of the breaking current can be regulated by the inductance of the coil.

(8) In this case, the coil may be a part of the power transmission coil. With this configuration, the coil for resonance and the coil for regulating the breaking current may be used together, contributing to simplification of the configuration.

(9) In each of the above configurations, a relay circuit may be further included that includes a relay coil magnetically coupled to the power transmission coil and that is configured such that a state of resonance changes as the power reception coil approaches. With this configuration, it may be possible to implement switching operations of the switching unit, even in a configuration that uses the relay circuit.

(10) In this case, the relay circuit may be electrically isolated from the resonance circuit, the switching unit may trigger a switch to the breaking operation state by placing the resonance circuit in the resonance state and the relay circuit in the non-resonance state, and in the breaking operation state, the breaking unit may be actuated by passing the breaking current through the resonance circuit.

(11) Alternatively, the relay circuit may be connected in series with the resonance circuit, the switching unit may trigger a switch to the breaking operation state by placing the resonance circuit in the resonance state and short-circuiting the relay coil to place the relay circuit in the non-resonance state, and in the breaking operation state, the breaking unit may be actuated by passing the breaking current through the resonance circuit and the short-circuited relay circuit. With these configurations, the breaking unit may be actuated with the breaking current in a simple configuration.

(12) In addition to the above modes of implementation, a wireless power transmission method is also possible. This wireless power transmission method is a wireless power transmission method for transmitting electric power wirelessly to a power reception device installed on an object to be powered, including: supplying alternating-current power from a main power supply device via power lines to a resonance circuit that includes a power transmission coil magnetically coupled to a power reception coil included in the power reception device, the resonance circuit being placed in a resonance state when the power reception coil is close to the power transmission coil, and being placed in a non-resonance state when the power reception coil is not close to the power transmission coil; when detecting an abnormality related to power transfer to the power reception device, placing the power lines in a non-conductive state to disconnect the power transfer from the main power supply device to the resonance circuit. With this configuration, when an abnormality occurs, the power lines are placed in a non-conductive state, which allows supply of alternating current power to the resonance circuit to be disconnected, thus avoiding the flow of a large current due to resonance. This can suppress occurrence of issues such as the main power supply device failing due to a large power load being imposed on it due to occurrence of an abnormality.

(13) In addition to the above modes of implementation, a wireless power transfer system is also possible. This wireless power transfer system includes: a main power supply device; a power transmission device that operates by being supplied with electric power from the main power supply device; and a power reception device that wirelessly receives electric power transmitted from the power transmission device. The power reception device includes: a power reception side resonance circuit including a power reception coil; a rectification circuit that rectifies alternating current induced in the power reception side resonance circuit to generate direct current power; and a load device that operates using the direct current power. The power transmission device includes: a power transmission side resonance circuit including a power transmission coil magnetically coupled to the power reception coil; a breaking unit that is provided in either or both of power lines from the main power supply device to the power transmission side resonance circuit and that is capable of switching the power lines to a non-conductive state; an abnormality detection unit that detects an abnormality related to power transfer to the power reception device; and a control unit that, when the abnormality detection unit detects the abnormality, actuates the breaking unit to disconnect the power transfer to the power transmission side resonance circuit. This power transfer system can wirelessly transfer power from the power transmission device to the power reception device, and in the event of an abnormality occurring related to the power transfer to the power reception device, the breaking unit is actuated to disconnect the power supply to the power transmission side resonance circuit, which can avoid the flow of a large current due to resonance in the power transmission device. This can suppress occurrence of issues such as the main power supply device failing due to a large power load being imposed on it due to occurrence of an abnormality.

(14) In the above embodiments and modifications, the control unit and the method thereof described in the present disclosure may be implemented by a special purpose computer which is configured with a memory and a processor programmed to execute one or more particular functions embodied in computer programs of the memory. Alternatively, the control unit and the method thereof described in the present disclosure may be implemented by a dedicated computer configured as a processor with one or more dedicated hardware logic circuits. Alternatively, the control unit and the method thereof described in the present disclosure may be implemented by one or more dedicated computer, which is configured as a combination of a processor and a memory, which are programmed to perform one or more functions, and a processor which is configured with one or more hardware logic circuits. The computer program may be stored on computer-readable non-transitory tangible storage media as instructions to be performed by a computer. The term "computer-readable non-transitory tangible storage media" include not only portable storage media such as a flexible disk and a CD-ROM, but also internal storage devices in a computer such as various RAMs and ROMs, as well as external storage devices such as hard disks that are fixed to the computer. That is, the term "computer-readable non-transitory tangible storage media" have a broad meaning that includes any storage media that may store data packets permanently rather than temporarily.

The present disclosure is not limited to any of the embodiments described above but may be implemented by a diversity of other configurations without departing from the scope of the disclosure. For example, the technical features of the embodiments corresponding to the technical features of the respective aspects may be replaced or combined appropriately, in order to solve some or all of the issues described above or in order to achieve some or all of the advantages described above. Any of the technical features may be omitted appropriately unless the technical feature is described as essential herein.

**Claims**

1. A power transmission device (50) that operates by being supplied with electric power from a main power supply device (70), and transmits electric power wirelessly to a power reception device (30) installed on an object to be powered, the power transmission device comprising:

   a resonance circuit (53) that includes a power transmission coil (51) magnetically coupled to a power reception coil (31) included in the power reception device;
   an abnormality detection unit (61) that detects an abnormality related to power transfer to the power reception device;
   a breaking unit (55, 56) that is provided in either or both of power lines (NL1, NL2) for supplying alternating-current power from the main power supply device to the resonance circuit and that is capable of placing the power lines in a non-conductive state;
   a control unit (65) that, when the abnormality detection unit detects the abnormality, actuates the breaking unit to disconnect the power supply from the main power supply device to the resonance circuit.

2. The wireless power transmission device according to claim 1, wherein

   the breaking unit includes at least one of a fuse (56), a relay contact, and a semiconductor switching element, and the power lines are placed in a non-conductive state by blowing the fuse, opening the relay contact, or turning off the semiconductor switching element.

3. The wireless power transmission device according to claim 1, further comprising:

   a switching unit (58A, 58B, 58C, 58D, 58E, 58F, 58G) that switches between a resonance state in which the resonance circuit transmits electric power to the power reception device, a non-resonance state in which the resonance circuit does not transmit electric power to the power reception device, and a breaking operation state in which a breaking current having a predefined magnitude is applied to actuate the breaking unit, wherein in an event of the abnormality being detected, the control unit drives the switching unit to switch to the breaking operation state.

4. The wireless power transmission device according to claim 3, wherein

   the resonance circuit includes a capacitor (Cs, Cr) that determines a resonance state together with the power transmission coil, and a change circuit (SW1, SW11) that changes at least one of an inductance of the power transmission coil and a capacitance of the capacitor, and
   the switching unit switches between the resonance state and the non-resonance state by the change circuit changing at least one of the inductance of the power transmission coil and the capacitance of the resonance capacitor.

5. The wireless power transmission device according to claim 3, wherein the switching unit includes a capacitor in a circuit through which the breaking current flows.

6. The wireless power transmission device according to claim 5, wherein the capacitor is a capacitor that determines the resonance state of the resonance circuit.

7. The wireless power transmission device according to claim 3, wherein
the switching unit includes a coil (51) in a circuit through which the breaking current flows.

8. The wireless power transmission device according to claim 7, wherein
the coil is a part of the power transmission coil.

9. The wireless power transmission device according to any one of claims 3 to 8, further comprising:
a relay circuit (80D, 80E, 80F, 80G) that includes a relay coil (81) magnetically coupled to the power transmission coil and that is configured such that a state of resonance changes as the power reception coil approaches.

10. The wireless power transmission device according to claim 9, wherein

the relay circuit is electrically isolated from the resonance circuit,
the switching unit triggers a switch to the breaking operation state by placing the resonance circuit in the resonance state and the relay circuit in the non-resonance state, and
in the breaking operation state, the breaking unit is actuated by passing the breaking current through the resonance circuit.

11. The wireless power transmission device according to claim 9, wherein

the relay circuit is connected in series with the resonance circuit,
the switching unit triggers a switch to the breaking operation state by placing the resonance circuit in the resonance state and short-circuiting the relay coil to place the relay circuit in the non-resonance state, and
in the breaking operation state, the breaking unit is actuated by passing the breaking current through the resonance circuit and the short-circuited relay circuit.

12. The wireless power transmission device according to claim 1, wherein

the resonance circuit includes a resonance capacitor that is used together with the power transmission coil, and
the power transmission coil and the resonance capacitor constitute at least one of a series resonance circuit, a parallel resonance circuit, a series-parallel resonance circuit, a parallel-series resonance circuit, and a series-parallel-series resonance circuit.

13. A wireless power transmission method for transmitting electric power wirelessly to a power reception device installed on an object to be powered, comprising:

supplying alternating-current power from a main power supply device via power lines to a resonance circuit that includes a power transmission coil magnetically coupled to a power reception coil included in the power reception device, the resonance circuit being placed in a resonance state when the power reception coil is close to the power transmission coil, and being placed in a non-resonance state when the power reception coil is not close to the power transmission coil;
when detecting an abnormality related to power transfer to the power reception device, placing the power lines in a non-conductive state to disconnect the power transfer from the main power supply device to the resonance circuit.

14. A wireless power transfer system (100) comprising: a main power supply device; a power transmission device that operates by being supplied with electric power from the main power supply device; and a power reception device that wirelessly receives electric power transmitted from the power transmission device, wherein

the power reception device comprises: a power reception side resonance circuit (33) including a power reception coil; a rectification circuit (34) that rectifies alternating current induced in the power reception side resonance circuit to generate direct current power; and a load device (45) that operates using the direct current power, and
the power transmission device comprises: a power transmission side resonance circuit including a power transmission coil magnetically coupled to the power reception coil; a breaking unit that is provided in either or both of power lines from the main power supply device to the power transmission side resonance circuit and that is capable of switching the power lines to a non-conductive state; an abnormality detection unit that detects an abnormality related to power transfer to the power reception device; and a control unit that, when the abnormality detection unit detects the abnormality, actuates the breaking unit to disconnect the power transfer to the power transmission side resonance circuit.

# FIG.1

# FIG.2

# FIG.3

# FIG.4

# FIG.5

# FIG.6

# FIG.7

```
      ┌──────────────────────────┐
      │  POWER TRANSMISSION      │
      │  CONTROL ROUTINE         │
      └──────────────────────────┘
                  │
                  ▼
      ┌──────────────────────────┐
      │  READ SIGNALS FROM       │── S100
      │  ABNORMALITY DETECTION   │
      │  UNIT                    │
      └──────────────────────────┘
                  │
                  ▼        S110
              ◇ ABNORMALITY ◇──── YES ──────────────────┐
              ◇  DETECTED ? ◇                           │
                  │ NO                                  │
                  ▼                                     │
      ┌──────────────────────────┐                     │
      │  READ SIGNALS FROM       │── S120              │
      │  APPROACH SENSOR         │                     │
      └──────────────────────────┘                     │
                  │                                     │
                  ▼        S130                         │
              ◇ APPROACHING ? ◇──── YES ──┐            │
                  │ NO                      │            │
       S145       ▼                  S140  ▼            │
  ┌──────────────────────┐   ┌──────────────────────┐ │
  │ SET PORT 1 LOW       │   │ SET PORT 1 HIGH      │ │
  │ (SW1 OFF)            │   │ (SW1 ON)             │ │
  └──────────────────────┘   └──────────────────────┘ │
                  │                  │                  │
                  ▼◄─────────────────┘       S200      │
              ◇ POWER     ◇ S150                        ▼
   NO ─────── ◇ TRANSMISSION ◇     ┌──────────────────────────────┐
              ◇ TERMINATED ? ◇     │ SET PORT 2 HIGH              │
                  │ YES            │ (ACTUATE BREAKING UNIT)      │
                  │                └──────────────────────────────┘
                  ▼                          │
            ┌──────────┐                     │
            │   END    │◄────────────────────┘
            └──────────┘
```

# FIG.8A

# FIG.8B

| | NORMAL STATE | | ABNORMALITY DETECTED STATE |
|---|---|---|---|
| SW2 | OFF | | ON |
| BREAKING UNIT (FUSE) | UNACTUATED | | ACTUATED (WITH FUSE BLOWN) |
| SW1 | OFF | ON | |
| RESONANCE CIRCUIT | NON-RESONANCE STATE | RESONANCE STATE | |

# FIG.8C

# FIG.9

# FIG.10

# FIG.11A

# FIG.11B

| | NORMAL STATE | | ABNORMALITY DETECTED STATE |
|---|---|---|---|
| P2 | L | | H |
| P1 | L | H | |
| SW1 | OFF | ON | ON |
| SW2 | ON | OFF | ON |
| RESONANCE CIRCUIT | NON-RESONANCE STATE | RESONANCE STATE | |
| BREAKING UNIT (FUSE) | UNACTUATED | | ACTUATED (WITH FUSE BLOWN) |

# FIG.12

# FIG.13

# FIG.14

# FIG.15

# FIG.16

| | NORMAL STATE | | ABNORMALITY DETECTED STATE |
|---|---|---|---|
| SW1 | OFF | ON | ON |
| SW2 | ON | OFF | ON |
| RESONANCE CIRCUIT | NON-RESONANCE STATE | RESONANCE STATE | |
| BREAKING UNIT (FUSE) | UNACTUATED | | ACTUATED (WITH FUSE BLOWN) |

# FIG.17

## INTERNATIONAL SEARCH REPORT

International application No.

**PCT/JP2023/026596**

| A. | CLASSIFICATION OF SUBJECT MATTER |
|---|---|

*H02J 50/40*(2016.01)i; *H02J 50/12*(2016.01)i
FI: H02J50/40; H02J50/12

According to International Patent Classification (IPC) or to both national classification and IPC

| B. | FIELDS SEARCHED |
|---|---|

Minimum documentation searched (classification system followed by classification symbols)

H02J50/40; H02J50/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2020/217446 A1 (MITSUBISHI ELECTRIC CORP.) 29 October 2020 (2020-10-29) paragraphs [0013], [0014], [0036]-[0052], fig. 6 | 1-2, 12, 14 |
| Y | | 3-4, 7, 13 |
| A | | 5-6, 8-11 |
| Y | JP 2017-131008 A (FUJITSU LTD.) 27 July 2017 (2017-07-27) paragraph [0062] | 3-4, 7, 13 |
| A | JP 2013-240246 A (KABUSHIKI KAISHA TOSHIBA) 28 November 2013 (2013-11-28) entire text, all drawings | 9-11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 September 2023** | **19 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/026596**

| Patent document cited in search report | Publication date (day/month/year) | Patent family member(s) | Publication date (day/month/year) |
|---|---|---|---|
| WO 2020/217446 A1 | 29 October 2020 | US 2022/0158500 A1 paragraphs [0029]-[0038], [0096]-[0134], fig. 6 CN 113767549 A | |
| JP 2017-131008 A | 27 July 2017 | (Family: none) | |
| JP 2013-240246 A | 28 November 2013 | US 2013/0307345 A1 entire text, all drawings | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022139140 A

- JP 2017051074 A